# EUROPÄISCHE PATENTANMELDUNG

(11) **EP 0 999 226 A1**
(43) Veröffentlichungstag der Anmeldung: **10.05.2000**
(21) Anmeldenummer: 99118107.4
(22) Anmeldetag: 10.09.1999
(51) Int. Cl.: C08G 18/79

(54) **Feste, Triazingruppen aufweisende Polyurethanhärter, Verfahren zur Herstellung derartiger Verbindungen sowie deren Verwendung**

(30) Priorität: 05.11.1998 DE 19850970
(71) Anmelder: Degussa-Hüls Aktiengesellschaft, 60287 Frankfurt am Main (DE)
(72) Erfinder: Spyrou, Emmanouil, Dr., 45772 Marl (DE); Kohlstruk, Stephan, Dr., 45770 Marl (DE); Loesch, Holger, 44672 Herne (DE)

(57) **Zusammenfassung**

Die Erfindung betrifft feste, Triazingruppen aufweisende Polyurethanhärter, Verfahren zur Herstellung derartiger Verbindungen sowie deren Verwendung zur Herstellung von Kunststoffen, insbesondere Pulverlacken, die zu hochglänzenden oder matten, licht- und wetterstabilen Lackfilmen vernetzen.

## Beschreibung

Die Erfindung betrifft feste, Triazingruppen aufweisende Polyurethanhärter. Verfahren zur Herstellung derartiger Verbindungen sowie deren Verwendung zur Herstellung von Kunststoffen, insbesondere Pulverlacken, die zu hochglänzenden oder matten, licht- und wetterstabilen Lackfilmen vernetzen.

Bei Raumtemperatur feste, extern oder intern blockierte Polyisocyanate, stellen wertvolle Vernetzer für thermisch vernetzbare Polyurethan (PUR)-Pulverlacke dar.

So beschreibt z. B. die DE-PS 27 35 497 PUR-Pulverlacke mit hervorragender Witterungs- und Wärmestabilität. Die Vernetzer, deren Herstellung in der DE-PS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser rein extern blockierten Systeme besteht in der stöchiometrischen Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 3030539 und DE-OS 3030572 beschreiben Verfahren zur Herstellung von uretdiongruppenhaltigen Polyadditionsverbindungen, deren terminale Isocyanatgruppen mit Monoalkoholen oder Monoaminen irreversibel verkappt sind. Nachteilig sind insbesondere die Ketten abbrechenden Bestandteile der Vernetzer, die zu geringen Netzwerkdichten der PUR-Pulverbeschichtungen und damit zu mäßigen Lösemittelbeständigkeiten führen.

Hydroxylgruppenterminierte, uretdiongruppenhaltige Polyadditionsverbindungen sind Gegenstand der EP 0669353. Sie weisen aufgrund ihrer Funktionalität von zwei eine verbesserte Resistenz gegenüber Lösemitteln auf. Den Pulverlacken auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Lacken wird in der EP 803 524 beschrieben. Es findet jedoch keine chemische Umsetzung des PUR-Härters mit dem Katalysator statt.

Aufgabe der vorliegenden Erfindung war es daher, abspaltarme hochreaktive PUR-Härter zu finden, die sich insbesondere zur Herstellung von Kunststoffen-, sowie von ökologisch wertvollen Pulverlacken eignen. Die Aufgabe wurde gemäß den Patentansprüchen gelöst.

Gegenstand der vorliegenden Erfindung sind feste, Triazingruppen aufweisende PUR-Härter mit einem Schmelzpunkt von 40 bis 130 °C und einem freien NCO-Gehalt von kleiner 2 Gew.-%, bestehend aus dem Reaktionsprodukt
A) einer mindestens eine Uretdiongruppe aufweisenden Polyadditionsverbindung, hergestellt durch Umsetzung von
   1. uretdiongruppenhaltigen Polyisocyanaten
      und
   2. hydroxylgruppenhaltigen Kettenverlängerern,
   und
B) einer Verbindung mit mindestens einer C=N-Bindung,
   wobei das Äquivalenzverhältnis der eingesetzten Uretdiongruppen zur C=N-Bindung zwischen 1,0 : 0,05 und 1,0 : 1,0 liegt.

Das Prinzip dieser Erfindung ist es, herkömmliche uretdiongruppenhaltige Pulverlackhärter, oder eigens dafür hergestellte Uretdiongruppen aufweisende Polyadditionsverbindungen, mit geeigneten Verbindungen mit mindestens einer C=N-Bindung, wie z. B. Iminen oder Amidinen, zu neuen PUR-Härtern umzusetzen, wobei sich sowohl physikalische wie auch chemische Eigenschaften (Schmelzpunkt, Glasübergangstemperatur, NMR-Spektrum, Reaktivität) zum Teil drastisch verändern. Das Äquivalenzverhältnis der eingesetzten Uretdiongruppen zur C=N-Bindung variiert zwischen 1,0 : 0,05 und 1,0 : 1,0. Damit gehören diese neuartigen Härter einer Gruppe von gemischt intern und extern blockierten PUR-Härtern an.

Gegenüber den rein extern blockierten Pulverlackhärtern haben die erfindungsgemäßen Verbindungen den Vorteil, deutlich weniger Blockierungsmittel freizusetzen und zusätzlich reaktiver zu sein. Gegenüber den rein intern blockierten Pulverlackhärtern ist die Aushärtungstemperatur deutlich niedriger.

Uretdiongruppen enthaltende Polyisocyanate sind wohlbekannt und werden beispielsweise in US 4 476 054, US 4 912 210, US 4 929 724 sowie EP 417 603 beschrieben. Ein umfassender Überblick über industriell relevante Verfahren zur Dimerisiserung von Isocyanaten zu Uretdionen liefert das J. Prakt. Chem. 336 (1994) 185-200. Im allgemeinen erfolgt die Umsetzung von Isocyanaten zu Uretdionen in Gegenwart löslicher Dimerisierungskatalysatoren wie z.B. Dialkylaminopyridinen, Trialkylphosphinen, Phosphorigsäuretriamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluß durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), Hexamethylendiisocyanat (HDI), 2-Methylpentandiisocyanat (MPDI), 2,2,4-Trimethyl-hexamethylendiisocyanat/2,4,4-Trimethyl-hexamethylendiisocyanat (TMDI), Norbornandiisocyanat (NBDI), Methylendiphenyldiisocyanat (MDI) und Tetramethylxylylendiisocyanat (TMXDI) bevorzugt verwendet.

Die Umsetzung dieser uretdiongruppentragenden Polyisocyanate zu Uretdiongruppen aufweisenden Polyadditionsverbindungen beinhaltet die Reaktion der freien NCO-Gruppen mit hydroxylgruppenhaltigen Monomeren oder Polymeren, z. B Polyester, Polythioether, Polyether, Polycaprolactame, Polyepoxide, Polyesteramide, Polyurethane oder niedermolekulare Di-, Tri- und/oder Tetraalkohole als Kettenverlängerer und gegebenenfalls Monoaminen und/oder Monoalkoholen als Kettenabbrecher und wurde schon häufig beschrieben, beispielsweise in den Patenten EP 669 353, EP 669354, DE 3030572, EP 639 598 oder EP 803524. Bevorzugte Uretdiongruppen aufweisende Polyadditionsverbindungen haben einen freien NCO-Gehalt von weniger als 2 Gew. % und einen Gehalt an Uretdiongruppen von 3 bis 17 Gew.%. Außer den Uretdiongruppen können die Polyadditionsverbindungen auch Isocyanurat-, Biuret-, Allophanat-, Urethan- und/oder Harnstoff-Strukturen aufweisen.

Erfindungsgemäß sind alle Verbindungen als Komponente B geeignet, die mindestens eine C=N-Bindung aufweisen und mit der Komponente A reagieren können. Beispiele dafür sind Imine, Amidine, Oxazoline, Oxime oder Imidazole.
Bevorzugte Amidine, die zur Herstellung der erfindungsgemäßen PUR-Härter geeignet sind, sind z. B. N,N-Dimethyl-N'-phenylformamidinin, 2-Methyltetrahydropyrimidin, 1-Aceto-2-phenylimidazolin und 1-Aceto-2,4-dimethylimidazolin. Besonders bevorzugt werden N,N,N'-trisubstituierte Amidine, wie 1,5-Diazabicyclo[4.3.0]-non-5-en (DBN) und 1,8-Diazabicyclo[5.4.0]undec-7-en (DBU). Die Herstellung solcher bicyclischen Amidine wird beispielsweise in EP 662 476 beschrieben.

Gegenstand der Erfindung ist auch ein Verfahren zur Herstellung von Triazingruppen aufweisenden Verbindungen, dadurch gekennzeichnet,
daß
A) eine mindestens eine Uretdiongruppe aufweisende Ausgangsverbindung
   und
B) eine Verbindung mit mindestens einer C=N-Bindung
   bei Temperaturen von 20-120 °C umgesetzt werden.

Weiterhin Gegenstand der Erfindung ist ein Verfahren zur Herstellung von festen, Triazingruppen aufweisenden PUR-Härtern mit einem Schmelzpunkt von 40-130 °C und einem freien NCO-Gehalt von kleiner 2 Gew.-%, durch Umsetzung von
A) einer mindestens eine Uretdiongruppe aufweisenden Polyadditionsverbindung, hergestellt durch Umsetzung von
   1. uretdiongruppenhaltigen Polyisocyanaten
      und
   2. hydroxylgruppenhaltigen Kettenverlängerern,
   und
B) einer Verbindung mit mindestens einer C=N-Bindung,
   bei Temperaturen von 20-120 °C, wobei das Äquivalenzverhältnis der eingesetzten Uretdiongruppen zur C=N-Bindung zwischen 1,0 : 0,05 und 1,0 : 1,0 liegt.

Triazine sind bekannt (H. Ulrich, R. Richter, Neue Methoden der präparativen Org. Chemie 1970, 6, 267). Sie wurden hergestellt aus Iminen oder Amidinen in der Reaktion mit Isocyanaten. Nicht beschrieben ist die einfache Herstellung dieser Triazine aus einem Uretdion und einer C=N-Bindung, wie z. B. einem Imin oder Amidin. Die Reaktionspartner können sowohl in Lösemittel als auch in Substanz, zum Beispiel kontinuierlich in einem Intensivkneter in einem Ein- oder Zweischneckenextruder, bei Temperaturen zwischen 20-180°C miteinander umgesetzt werden. Im NMR-Spektrum läßt sich das Verschwinden des C=N Kohlenstoffatomsignals erkennen, sowie das Auftreten von charakteristischen Signalen des entstehenden Triazins.

Dabei läuft folgende Reaktion ab: 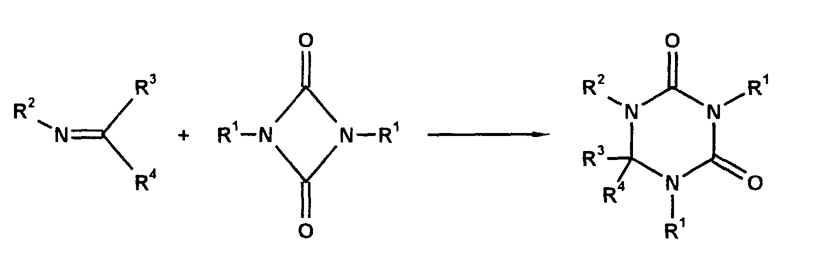 wobei R1 die restlichen Bestandteile aus der eingesetzten uretdiongruppenhaltigen Verbindung beschreibt und R2-R4 Reste der eingesetzten C=N-Verbindung, bedeuten, so daß NMR-spektroskopisch bei Raumtemperatur weniger als 5% der eingesetzten C=N-Verbindung frei nachgewiesen werden kann.

Der Vorteil dieser Herstellungsmethode ist die Gewährleistung, daß keine freien monomere Diisocyanate in der Formulierung auftreten, die aus toxikologischen Gründen nachteilig wären.

Gegenstand der vorliegenden Erfindung ist auch die Verwendung der erfindungsgemäßen PUR-Härter zur Herstellung von Kunststoffen, insbesondere von Pulverlacken.

Ein weiterer Gegenstand der Erfindung sind abspaltarme, transparente oder pigmentierte Pulverlacke, enthaltend PUR-Härter nach den Ansprüchen 1 bis 12 in Kombination mit hydroxylgruppenhaltigen Polymeren. Bei den hydroxylgruppenhaltigen Polymeren handelt es sich um Polyester, Polyether. Polyacrylate oder Polycarbonate mit einer OH-Zahl von 25 - 200, bevorzugt Polyester mit einer OH-Zahl von 30-150, einem mittleren Molekulargewicht von 500-6000 und einem Schmelzpunkt zwischen 40 und 130°C. Solche Bindemittel sind beispielsweise in EP 669 354 und EP 254 152 beschrieben worden. Selbstverständlich können auch Mischungen solcher Harze eingesetzt werden.

Für die Pulverlackherstellung werden die in der Pulverlacktechnologie üblichen Zusatzstoffe wie Verlaufsmittel, z.B. Polysilicone oder Acrylate, Lichtschutzmittel z.B. sterisch gehinderte Amine, Pigmente wie z.B. Titandioxid und Katalysatoren wie z.B. Dibutylzinndilaurat und Zinnoctoat, oder andere Hilfsmittel, wie sie z.B. in dem Patent EP 669353 beschrieben wurden, in einer Gesamtmenge von 0,05 bis 5% zugesetzt.

Das Verhältnis zwischen blockierten NCO-Gruppen des Pulverlackhärters und OH-Gruppen des Harzes wird unabhängig davon, ob die NCO-Gruppen intern oder extern blockiert sind, im Bereich von 0,8:1 und 1,2:1 gehalten.

Die Homogenisierung aller Bestandteile des Pulverlackes kann in geeigneten Aggregaten, wie z. B. beheizbaren Knetern, vorzugsweise jedoch durch Extrudieren, erfolgen, wobei Temperaturobergrenzen von 120 bis 130°C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z.B. durch elektrostatisches Pulversprühen, Wirbelsintern, oder elektrostatisches Wirbelsintern erfolgen. Nach dem Pulverauftrag werden die beschichteten Werkstücke zur Aushärtung 4 bis 60 Minuten auf eine Temperatur von 120 bis 220°C, vorzugsweise 6 bis 30 Minuten bei 120 bis 160°C erhitzt.

Nachfolgend wird der Gegenstand der Erfindung anhand von Beispielen näher erläutert.

| **Einsatzstoffe** | **Produktbeschreibung, Hersteller** |
|---|---|
| VESTAGON BF 1540 | Pulverlackhärter, CREANOVA Spezialchemie GmbH, NCO-Gehalt: 15,9 %, Schmp.: 98-109 °C, T_{G}: 83 °C |
| ALFTALAT AN 739 | OH-Polyester, Höchst AG, OH-Zahl: 53 |
| URALAC P 1480 | OH-Polyester, DSM, OH-Zahl: 27 |
| KRONOS 2160 | Titandioxid, Kronos |
| RESIFLOW PV 88 | Verlaufsmittel, Worlee |
| Benzoin | Verlaufsmittel, Aldrich |
| OH-Zahl: Verbrauch in mg KOH/g Harz Schmp.: Schmelzpunkt T_{G}: Glasübergangspunkt | |

### Pulverlackhärter A

VESTAGON BF 1540 (CREANOVA Spezialchemie GmbH) (500 g) wird in 400 ml Aceton gelöst und mit 1,5-Diazabicyclo[4.3.0]non-5-en (DBN) (14,5 g) versetzt (Äquivalenzverhältnis Uretdion/Amidin = 1,0 : 0,12). Die Lösung wird 1 h bei unter Rückfluß gehalten und danach im Vakuum vom Lösemittel befreit. Das Produkt hat einen Schmelzpunkt von 114-116 °C und eine T_{G} von 85 °C.

### Pulverlackhärter B

VESTAGON BF 1540 (CREANOVA Spezialchemie GmbH (500 g) wird in 400 ml Aceton gelöst und mit 1,5-Diazabicyclo[4.3.0]non-5-en (DBN) (29 g) versetzt (Äquivalenzverhältnis Uretdion/Amidin = 1,0 : 0,24). Die Lösung wird 1 h bei unter Rückfluß gehalten und danach im Vakuum vom Losemittel befreit. Das Produkt hat einen Schmelzpunkt von 117-120 °C und eine T_{G} von 87 °C.

Allgemeine Herstellungsvorschrift für die Pulverlacke:

Die zerkleinerten Einsatzstoffe - erfindungsgemäße Pulverlackhärter, hydroxyfunktionelle Harze, Verlaufsmittel, Katalysatoren - werden in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete Eisenbleche appliziet und in einem Umlufttrockenschrank bei Temperaturen zwischen 150 und 180 °C eingebrannt.

| **Beispiele** | **Pulverlackhärter** | **Menge [g]** | **OH-Komp.** | **Menge [g]** | **Pigment 35 %** |
|---|---|---|---|---|---|
| 1 | A | 129,5 | ALFTALAT AN 739 | 505,5 | 350 g TiO₂ |
| 2 | B | 132,9 | ALFTALAT AN 739 | 502,1 | 350 g TiO₂ |
| 3 | A | 83,4 | URALAC P 1480 | 511,6 | 350 g TiO₂ |
| V1* | VESTAGON BF 1540 | 126,6 | ALFTALAT AN 739 | 508,1 | 350 g TiO₂ |
| V2* | VESTAGON BF 1540 | 80,8 | URALAC P 1480 | 554,2 | 350 g TiO₂ |

| | | | | | |
|---|---|---|---|---|---|
| * nicht erfindungsgemäße Vergleichsbeispiele | | | | | |

Zusätzlich wurden in jeder der Formulierungen noch 10 g RESIFLOW und 5 g Benzoin eingearbeitet.

| **Lackdaten:** | | | | |
|---|---|---|---|---|
| **Beispiele** | **Härtung min/°C** | **Tiefung [mm]** | **SD [µm]** | **Bemerkung** |
| 1 | 30′150 | 9,9 | 65-75 | ausgehärtet |
| | 20′160 | 10,8 | 50-60 | ausgehärtet |
| | 15′180 | 10,5 | 55-65 | ausgehärtet |
| 2 | 30′150 | 10,1 | 50-60 | ausgehärtet |
| | 20′160 | 10,6 | 70-80 | ausgehärtet |
| | 15′180 | 11,1 | 55-60 | ausgehärtet |
| 3 | 30′150 | 10,6 | 65-75 | ausgehärtet |
| | 20′160 | 10,4 | 65-70 | ausgehärtet |
| | 15′180 | 10,4 | 50-60 | ausgehärtet |
| V1* | 30′150 | 0,3 | 70-80 | nicht ausgehärtet |
| | 20′160 | 0,5 | 65-76 | nicht ausgehärtet |
| | 15′180 | 10,1 | 60-70 | ausgehärtet |
| V2* | 30′150 | 0,2 | 70-80 | nicht ausgehärtet |
| | 20′160 | 1,2 | 55-65 | nicht ausgehärtet |
| | 15′180 | 10,6 | 55-60 | ausgehärtet |

| | | | | |
|---|---|---|---|---|
| * nicht erfindungsgemäße Vergleichsbeispiele | | | | |

## Patentansprüche

1. Feste, Triazingruppen aufweisende PUR-Härter mit einem Schmelzpunkt von 40 bis 130 °C und einem freien NCO-Gehalt von kleiner 2 Gew.-%, bestehend aus dem Reaktionsprodukt
A) einer mindestens eine Uretdiongruppe aufweisenden Polyadditionsverbindung, hergestellt durch Umsetzung von
1. uretdiongruppenhaltigen Polyisocyanaten
und
2. hydroxylgruppenhaltigen Kettenverlängerern,
und
B) einer Verbindung mit mindestens einer C=N-Bindung,
wobei das Äquivalenzverhältnis der eingesetzten Uretdiongruppen zur C=N-Bindung zwischen 1,0 : 0,05 und 1,0 : 1,0 liegt.

2. PUR-Härter nach Anspruch 1,
dadurch gekennzeichnet,
daß als Komponente A1 aliphatische, cycloaliphatische, (cyclo)aliphatische, aromatische und/oder heterocyclische Polyisocyanate eingesetzt werden.

3. PUR-Härter nach Anspruch 1-2,
dadurch gekennzeichnet,
daß als Komponente A1 Uretdione von Isophorondiisocyanat (IPDI), Hexamethylendiisocyanat (HDI), 2-Methylpentan-1,5-diisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxyclendiisocyanat (TMXDI) eingesetzt werden.

4. PUR-Härter nach Anspruch 1-3,
dadurch gekennzeichnet,
daß als Kettenverlängerer Polyole, Polyamine und/oder Aminoalkohole eingesetzt werden.

5. PUR-Härter nach Anspruch 4,
dadurch gekennzeichnet,
daß als Polyole hydroxylgruppenhaltige Polyester, Polythioether, Polyether, Polycaprolactame, Polyepoxide, Polyesteramide, Polyurethane und/oder monomere Di-, Tri- oder Tetraalkohole eingesetzt werden.

6. PUR-Härter nach Anspruch 1-5,
dadurch gekennzeichnet,
daß die Komponente A zusätzlich Kettenabbrecher enthält.

7. PUR-Härter nach Anspruch 6,
dadurch gekennzeichnet,
daß als Kettenabbrecher Monoalkohole und/oder Monoamine eingesetzt werden.

8. PUR-Härter nach Anspruch 1-7,
dadurch gekennzeichnet,
daß die Polyadditionsverbindung A zusätzlich Isocyanurat-, Biuret-, Allophanat-, Urethan- und/oder Harnstoff-Strukturen enthält.

9. PUR-Härter nach Anspruch 1-8,
dadurch gekennzeichnet,
daß als Komponente B Imine, Amidine, Oxazoline, Oxime und/oder Imidazole eingesetzt werden.

10. PUR-Härter nach Anspruch 9,
dadurch gekennzeichnet,
daß als Amidine 1,5-Diazabicyclo[4.3.0]non-5-en (DBN) und/oder 1,8-Diazabicyclo[5.4.0]undec-7-en (DBU) eingesetzt werden.

11. Verfahren zur Herstellung von Triazingruppen aufweisenden Verbindungen,
dadurch gekennzeichnet,
daß
A) eine mindestens eine Uretdiongruppe aufweisende Ausgangsverbindung
und
B) eine Verbindung mit mindestens einer C=N-Bindung
bei Temperaturen von 20-120 °C umgesetzt werden.

12. Verfahren zur Herstellung von festen, Triazingruppen aufweisenden PUR-Härtern mit einem Schmelzpunkt von 40-130 °C und einem freien NCO-Gehalt von kleiner 2 Gew.-%, durch Umsetzung von
A) einer mindestens eine Uretdiongruppe aufweisenden Polyadditionsverbindung, hergestellt durch Umsetzung von
1. uretdiongruppenhaltigen Polyisocyanaten
und
2. hydroxylgruppenhaltigen Kettenverlängerern,
und
B) einer Verbindung mit mindestens einer C=N-Bindung,
bei Temperaturen von 20-120 °C, wobei das Äquivalenzverhältnis der eingesetzten Uretdiongruppen zur C=N-Bindung zwischen 1,0 : 0,05 und 1,0 : 1,0 liegt.

13. Verfahren nach Anspruch 11 oder 12,
dadurch gekennzeichnet,
daß die Umsetzung im Lösemittel erfolgt.

14. Verfahren nach Anspruch 11 oder 12,
dadurch gekennzeichnet,
daß die Umsetzung lösemittelfrei erfolgt.

15. Verwendung der PUR-Härter gemäß den Ansprüchen 1 bis 10 zur Herstellung von Kunststoffen.

16. Verwendung der PUR-Härter gemäß den Ansprüchen 1 bis 10 zur Herstellung von abspaltarmen, transparenten oder pigmentierten Pulverlacken.

17. Abspaltarme, transparente oder pigmentierte Pulverlacke, enthaltend PUR-Härter nach den Ansprüchen 1 bis 10 in Kombination mit hydroxylgruppenhaltigen Polymeren.

18. Pulverlacke nach Anspruch 17 in Kombination mit Polyhydroxylpolyestern oder Polyhydroxylpolyacrylaten.

19. Pulverlacke gemäß Anspruch 18,
dadurch gekennzeichnet,
daß Polyester und/oder Polyacrylate mit einer OH-Zahl von 25 bis 200 mg KOH/g eingesetzt werden.
